(19) Europäisches Patentamt
European Patent Office
Office européen des brevets

(11) **EP 3 071 879 B1**

(12) **EUROPÄISCHE PATENTSCHRIFT**

(45) Veröffentlichungstag und Bekanntmachung des Hinweises auf die Patenterteilung:
**23.08.2023   Patentblatt 2023/34**

(21) Anmeldenummer: **14803088.5**

(22) Anmeldetag: **21.11.2014**

(51) Internationale Patentklassifikation (IPC):
**F21V 8/00** (2006.01)

(52) Gemeinsame Patentklassifikation (CPC):
**G02B 6/0028; G02B 6/0031; G02B 6/0075;**
F21Y 2113/13; F21Y 2115/10

(86) Internationale Anmeldenummer:
**PCT/EP2014/075297**

(87) Internationale Veröffentlichungsnummer:
**WO 2015/075188 (28.05.2015 Gazette 2015/21)**

(54) **OPTISCHES ELEMENT UND BELEUCHTUNGSVORRICHTUNG MIT OPTISCHEM ELEMENT**

OPTICAL ELEMENT AND LIGHTING DEVICE WITH AN OPTICAL ELEMENT

ÉLÉMENT OPTIQUE ET DISPOSITIF D'ÉCLAIRAGE DOTÉ D'UN ÉLÉMENT OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2013   DE 102013112905**

(43) Veröffentlichungstag der Anmeldung:
**28.09.2016   Patentblatt 2016/39**

(73) Patentinhaber: **SCHOTT AG**
**55122 Mainz (DE)**

(72) Erfinder:
• **WÖLFING, Bernd**
**55122 Mainz (DE)**

• **HATZENBÜHLER, Andreas**
**55546 Neu-Bamberg (DE)**

(74) Vertreter: **Blumbach · Zinngrebe Patentanwälte PartG mbB**
**Alexandrastraße 5**
**65187 Wiesbaden (DE)**

(56) Entgegenhaltungen:
WO-A2-2004/001456      DE-A1- 19 942 513
US-A- 6 092 904         US-A1- 2004 061 814
US-A1- 2006 126 178     US-A1- 2007 116 424
US-A1- 2013 077 341

**Beschreibung**

Beschreibung

Die Erfindung betrifft allgemein Lichtquellen, in welchen mit mehreren farbigen Leuchtelementen Lichtfarben gemischt werden können.

Für die Beleuchtung unter anderem von Fahrzeug- und Gebäudeinnenräumen, etwa in Flugzeugkabinen werden zunehmend Leuchtdioden eingesetzt. Diese eignen sich hier besonders aufgrund ihres niedrigen Energieverbrauchs und der niedrigen Betriebsspannung.

So zeigt beispielsweise die WO 2010/013181 A1 ein optisches Element mit einem Lichtübertragungsbereich, der über seine gesamte Länge einen konstanten Querschnitt aufweist. An diesen Lichtübertragungsbereich schließt sich in der Richtung der Lichtstrahlen ein Lichtkollimierungsbereich an, dessen Querschnitt in Ausbreitungsrichtung des Lichtes zunimmt. Das Ende des Lichtkollimierungsbereichs wird von einem schräg stehenden Reflektor gebildet. An diesem Reflektor reflektiertes Licht verlässt das optische Element im Wesentlichen senkrecht zur Ausbreitungsrichtung des Lichts im Lichtübertragungsbereich. Der Lichtkollimierungsbereich kann verschiedene geometrische Formen aufweisen.

Die DE 10 2012 022 716 A1 zeigt ein Verfahren zum Einkoppeln und Mischen von Licht in einen Lichtleiter. Es wird Licht im Wesentlichen senkrecht zum Lichtleiter in diesen eingekoppelt, trifft auf einen schräg stehenden Reflektor und wird von letzterem in den Lichtleiter hinein reflektiert. Die Mischung des Lichts erfolgt durch Totalreflektion der Lichtstrahlen an den Innenwänden des Lichtleiters.

Die beschriebenen Lichtmischer nach dem Stand der Technik weisen eine hohe Symmetrie auf, die für einen reinen Lichtmischer durchaus vorteilhaft ist.

Wenn das optische Element aber eine Umlenkfunktion hat, erweist sich die symmetrische Ausgestaltung jedoch als nachteilig für eine möglichst effiziente Nutzung des Lichts in weiteren, nachgelagerten optischen Systemen.

Die DE 1 999 42 513 A1 zeigt einen Leuchtkörper für durchleuchtungsfähige Bilder mit einer lichtdurchlässigen, im wesentlichen planparallelen Platte. Das Licht einer oder mehrerer Lichtquellen wird in Randnähe in diese Platte eingekoppelt und breitet sich unter Vielfachrelexion an Ober - und Unterseite innerhalb der Platte aus. Ober- und/oder Unterseite weisen eine lichtbrechende, rasterförmige Oberflächenstruktur zum stellenweise definierten Lichtaustritt auf. Die Struktur vergrößert sich mit zunehmendem Abstand zut Lichteintrittsstelle. Oberhalb der Oberseite der Platte ist eine mit einer Streuschicht versehene Leuchtfläche befestigt. Zwischen Lichtquelle und Einkoppelstelle ist ein lichtleitendes Medium angeordnet.

Die US 6 092 904 A zeigt ein flaches und transparentes Beleuchtungssystem, bei dem das Licht einer Lichtquelle an der Stirnseite eingekoppelt wird. Dadurch wird ein unterhalb der Platte befindliches Objekt ausgeleuchtet, so dass es von einem oberhalb der Platte befindlichen Beobachter betrachtet werden kann.

Aus der WO 2004/001456 A2 ist ein Beleuchtungssystem mit einer Mehrzahl von Lampen, einer Mehrzahl von ersten Lichtreflektoren, einer Mehrzahl von zweiten Lichtreflektoren und einem Ausgangslichtleiter bekannt. Jeder der ersten Lichtreflektoren ist so angeordnet, dass er das von einer der Lampen abgegebene Licht auf einen Eingang eines der zweiten Lichtreflektoren reflektiert, der wiederum so angeordnet ist, dass er Licht von einem Ausgang eines der ersten Lichtreflektoren in einen Eingang des Ausgangslichtleiters leitet, so dass die Ausgänge jeder der Lampen zu einem einzigen Ausgang kombiniert werden. Durch die Einkopplung von mehreren zweiten Lichtreflektoren in den Ausgangslichtleiter hat der Ausgangslichtleiter einen rechteckigen Querschnitt.

US 2006/126178 A1 offenbart eine optische Anordnung gemäß dem Oberbegriff des Anspruchs 1.

Der Erfindung liegt die Aufgabe zugrunde, eine optische Anordnung zu schaffen, die gegenüber dem Stand der Technik eine höhere Effizienz bei der Nutzung des Lichts in nachgelagerten optischen Systemen aufweist.

Diese Aufgabe wird durch den Gegenstand des Anspruchs 1 gelöst. Vorteilhafte Ausgestaltungen und Weiterbildungen der Erfindung sind in den abhängigen Ansprüchen angegeben.

Demgemäß sieht die Erfindung eine optische Anordnung vor mit einem ersten optischen Element in Gestalt eines oder umfassend einen mit einer Anschnittfläche schräg angeschnittenen Lichtleiter und einem zweiten optischen Element, wobei das erste optische Element Licht durch Totalreflexion an dessen Wandung leitet, und eine Lichteintrittsfläche aufweist, welche durch die nicht angeschnittene Stirnfläche des Lichtleiters gebildet wird, und eine Lichtaustrittsfläche aufweist, wobei die Lichtaustrittsfläche durch einen Bereich der Wandung an dem Ende des Lichtleiters gebildet wird, an welchem die Anschnittfläche angeordnet ist. Das zweite optische Element weist hierbei eine Lichteintrittsapertur, welche an der Lichtaustrittsfläche des ersten optischen Elements oder in Gegenüberstellung der Lichtaustrittsfläche des ersten optischen Elements angeordnet ist, wobei die Lichteintrittsfläche des ersten optischen Elements eine Breite x gemessen in Richtung entlang des Schnitts der Lichteintrittsfläche mit der Ebene der Lichtumlenkung an der Anschnittfläche und die Lichteintrittsapertur des zweiten optischen Elements eine Höhe z gemessen in Richtung entlang des Schnitts der Lichtaustrittsfläche des ersten optischen Elements mit der Ebene der Lichtumlenkung an der Anschnittfläche aufweisen.

Die Breite x und die Höhe z stehen dabei in folgender Beziehung zueinander:

(1)

$$x/z \leq 1{,}5 \cdot \left[\tan\left(90° - \alpha/2\right) - \tan\left(90° - \left(2 \cdot \left[\alpha/2 + 90°\right] - \left[180° - \arcsin\left(1/n\right)\right]\right)\right)\right]^{-1}$$

Dabei bezeichnet α den Umlenkwinkel des Lichts an der Anschnittfläche und n den Brechungsindex des Materials des ersten optischen Elements bezeichnen. Das Koordinatensystem ist dabei ohne Einschränkung der Allgemeinheit so gewählt, dass die Ablenkung des Lichts nur in der x-z-Ebene stattfindet. Der Umlenkwinkel ist dabei der AblenkWinkel eines Lichtstrahls, welcher den Lichtleiter entlang der Längsrichtung des Lichtleiters durchquert, also auch nicht an der Seitenwandung des Lichtleiters reflektiert wird.

Durch die Umlenkung in einem Lichtmischer wird scheinbar die Eingangsseite des Lichtmischers auf seine Ausgangsseite abgebildet. Dieser scheinbar offensichtliche Zusammenhang gilt aber für Strahlenbündel mit einer Winkelverteilung mit einer typischen Halbwertsbreite α > 0 nicht mehr, was den Grund für die bereits angeführten Effizienzverluste bei der weiteren Nutzung des Lichts in nachgelagerten optischen Systemen darstellt. Mit der vorstehend genannten Beziehung wird die Abmessung z der Eintrittsapertur, die in der Umlenkebene des Lichts liegt, größer als die ebenfalls in Richtung der Umlenkebene des Lichts gemessene Breite x der Lichteintrittsfläche des ersten optischen Elements.

Für die Effizienz sind große Werte der Abmessung z günstig, allerdings sinkt der Zuwachs an in das zweite optische Element einkoppelbarer Intensität bei großen Werten für z, während damit entsprechend das zweite optische Element immer voluminöser wird. Es ist daher gemäß einer Weiterbildung der Erfindung von Vorteil, wenn die Höhe z des zweiten optischen Elements gegenüber der Breite der Lichteintrittsfläche des ersten optischen Elements begrenzt wird. Im Speziellen ist in Weiterbildung der Erfindung daher vorgesehen, dass die Abmessungen x und z zusätzlich in folgender Beziehung zueinander stehen:

(2)

$$x/z \geq 0{,}85 \cdot \left[\tan\left(90° - \alpha/2\right) - \tan\left(90° - \left(2 \cdot \left[\alpha/2 + 90°\right] - \left[180° - \arcsin\left(1/n\right)\right]\right)\right)\right]^{-1}.$$

In einer bevorzugten Ausführungsform liegt der Umlenkwinkel an der Anschnittfläche des ersten optischen Elements im Bereich von 75° bis 105°.

Der Lichtleiter des ersten optischen Elements ist bevorzugt in Gestalt eines Prismas ausgebildet, wobei dessen Lichteintrittsfläche durch die nicht angeschnittene Grundfläche des Prismas gebildet wird. Ein Prisma im Sinne der Erfindung ist ein Körper, welcher durch Parallelverschiebung einer Grundfläche, also im Falle der Erfindung durch Parallelverschiebung der Lichteintrittsfläche entsteht. Dabei muss die Grundfläche nicht unbedingt eckig sein. Vielmehr kann die Grundfläche, beziehungsweise die Querschnittfläche des Prismas auch runde Umrandungsabschnitte aufweisen.

Die Querschnittfläche des Lichtleiters weist bevorzugt eine Form auf, deren Abmessung sich in Richtung der vom zweiten optischen Element abgewandten Seite zum zweiten optischen Element hin monoton erweitert und dabei in zumindest einem Abschnitt entlang dieser Richtung streng monoton erweitert.

Der Lichtleiter weist hierbei bevorzugt zwei gegenüberliegende ebene Seitenflächen auf, wobei eine der Seitenflächen die Lichtaustrittsfläche umfasst, und wobei die Seitenfläche mit der Lichtaustrittsfläche breiter ist, als die gegenüberliegende Seitenfläche. Insbesondere ist dabei die Querschnittabmessung an der Lichtaustrittsfläche am größten.

Derartige Querschnittformen erweisen sich ebenfalls als besonders günstig für die Effizienz des optischen Systems. Mit solchen Querschnittformen wird erreicht, dass an der Lichtaustrittsfläche möglichst wenig Licht so austritt, dass es nicht mehr in die Eintrittsapertur des nachfolgenden optischen Elements gelangt.

In einer bevorzugten Ausführungsform ist die optische Anordnung dadurch gekennzeichnet, dass die Anschnittfläche in einem Winkel von 45° zur Längsrichtung des Lichtleiters steht, so dass das im Lichtleiter geleitete Licht um 90° an der Anschnittfläche umgelenkt wird. Dann stehen die Höhe der Lichteintrittsapertur des zweiten optischen Elements und die Breite x der Lichteintrittsfläche des ersten optischen Elements in folgender Beziehung zueinander:

$$\text{(3)} \quad x/z \leq 1{,}5 \cdot \left[1 + \tan\left(\arcsin\left(1/n\right)\right)\right]^{-1}$$

wobei n den Brechungsindex des Materials des ersten optischen Elements bezeichnet.

Vorzugsweise gilt dabei für das Verhältnis x/z zusätzlich:

$$(4) \quad x/z \geq 0{,}85 \cdot \left[1 + \tan\left(\arcsin\left(1/n\right)\right)\right]^{-1}$$

Die Form der Lichteintrittsapertur des zweiten optischen Elements der optischen Anordnung weist ein Aspektverhältnis von 0,8:1 bis 1,2:1, besonders bevorzugt von 0,9:1 bis 1,1:1, insbesondere bevorzugt von 1:1 für zwei zueinander senkrechte Richtungen auf. Die Erfindung ermöglicht gerade bei solchen Aspektverhältnissen um 1:1 und einer Lichtumlenkung eine hohe Einkoppeleffizienz.

Das Material des ersten optischen Elements weist bevorzugt einen Brechungsindex von mindestens 1,4 für sichtbares Licht auf. Damit wird der Öffnungswinkel für das eingekoppelte Licht klein gehalten und es kann Licht aus einem großen Raumwinkelbereich eingekoppelt werden. Vorzugsweise liegt der Brechungsindex des ersten optischen Elements im Bereich von 1,4 bis 2,1, besonders bevorzugt bis 2,0. Übliche geeignete optische Gläser liegen in diesem Brechzahlbereich, wobei typische Brechungsindizes bis n=1,9 reichen. Insbesondere bevorzugt wird daher ein Brechungsindex für sichtbares Licht zwischen 1,4 und 1,9.

Weiterhin sieht die Erfindung in Weiterbildung vor, dass die erfindungsgemäße optische Anordnung Teil einer Beleuchtungseinrichtung ist, die mehrere Leuchtelemente umfasst, die sich hinsichtlich der Farbe des abgegebenen Lichts voneinander unterscheiden, wobei die Leuchtelemente so angeordnet sind, dass deren Licht in die Lichteintrittsfläche des ersten optischen Elements eingekoppelt wird.

Gemäß einer bevorzugten Ausführungsform der Erfindung umfasst das zweite optische Element einen Lichtleiter, in welchen Licht, welches aus dem ersten optischen Element austritt, eingekoppelt wird. Der Lichtleiter weist lichtstreuende Strukturen entlang seiner Längsrichtung auf, welche eingekoppeltes Licht aus dem Lichtleiter herausstreuen.

Insbesondere ist es sinnvoll, das Licht in den Lichtleiter direkt durch dessen Stirnfläche einzukoppeln. Demgemäß werden das zweite optische Element durch den Lichtleiter und die Lichteintrittsapertur des zweiten optischen Elements durch eine der Lichtaustrittsfläche des ersten optischen Elements zugewandte Stirnfläche des Lichtleiters gebildet. Das Licht wird also in den Lichtleiter durch eine Stirnfläche eingekoppelt und aus dem Lichtleiter durch dessen Mantelfläche ausgekoppelt. Mit einer solchen Anordnung wird die Lichtintensität der Leuchtelemente also auf eine große Lichtaustrittsfläche verteilt. Die Erfindung hilft hier durch eine sehr hohe Einkoppeleffizienz Einkoppelverluste zu verringern, um die Leuchtdichte nicht weiter zu verringern.

Die Erfindung wird nachfolgend genauer und anhand der beigeschlossenen Figuren und Ausführungsbeispiele beschrieben. In den Figuren bezeichnen gleiche Bezugszeichen dabei gleiche oder entsprechende Elemente. Es zeigen:

Fig. 1          eine schematische Darstellung einer erfindungsgemäßen optischen Anordnung,

Fig. 2          eine schematische Darstellung des Strahlengangs in einem Lichtleiter mit schräg stehendem Reflektor,

Fig. 3a          eine Darstellung der Geometrie bei einer Umlenkung von Licht um 90°,

Fig. 3b          eine schematische Darstellung des Flächenverhältnisses zwischen Ein- und Auskoppelfläche für eine rechteckige und eine elliptische Einkoppelfläche,

Fig. 4          eine Darstellung der Geometrie bei einer Umlenkung von Licht um einen allgemeinen Winkel α,

Fig. 5a          eine Aufnahme der Lichtintensitätsverteilung in der Lichtaustrittsfläche,

Fig. 5b          ein Diagramm der Abhängigkeit des Grauwertes in Abhängigkeit vom Abstand zur linken Kante der Lichtaustrittsfläche,

Fig. 6          verschiedene Formen der Grundfläche des Lichtleiters der erfindungsgemäßen optischen Anordnung,

Fig. 7          eine schematische Darstellung einer Beleuchtungseinrichtung mit einer erfindungsgemäßen optischen Anordnung,

Fig. 8 bis Fig. 10    verschiedene Konfigurationen und Geometrien des ersten und zweiten optischen Elements,

Fig. 11             eine Weiterbildung der in Fig. 7 gezeigten Beleuchtungseinrichtung,

Fig. 12             eine optische Anordnung mit einem Umlenkwinkel kleiner als 90° und

Fig. 13             eine optische Anordnung mit einem Umlenkwinkel größer als 90° und

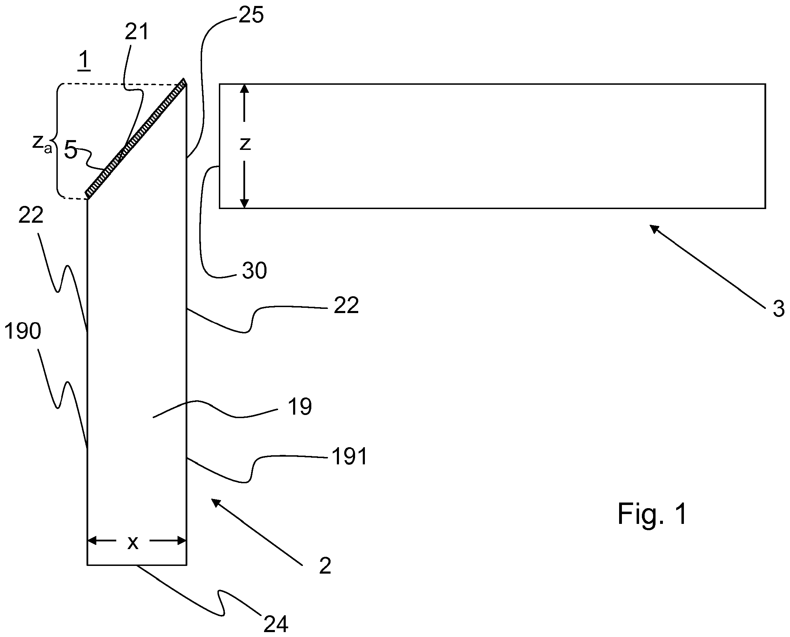

Fig. 1 zeigt in schematischer Darstellung eine erfindungsgemäße optische Anordnung 1 mit einem ersten optischen Element 2 und einem zweiten optischen Element 3. Das erste optische Element 2 ist ein Lichtleiter 19 mit Wandungen 22, einer Lichteintrittsfläche 24, sowie einer Lichtaustrittsfläche 25. Die Lichtaustrittsfläche 25 befindet sich gegenüber einer schrägen Anschnittfläche 21, an der das Licht durch Reflexion umgelenkt wird. Allgemein, ohne Beschränkung auf die spezielle in Fig. 1 dargestellte Ausführungsform kann die Anschnittfläche dazu mit einer Verspiegelung versehen sein. Dies kann eine dichroitische oder metallische Beschichtung (z.B. aus Aluminium oder Silber) sein, wobei die metallische Beschichtung ggf. über eine weitere Schicht (z.B. SiO2) gegenüber Korrosion geschützt wird. Die Verspiegelung kann auch über das Aufkleben eines Spiegels oder einer Spiegelfolie erfolgen.

Eine Verspiegelung der Anschnittfläche wird für alle Ausführungsformen besonders bevorzugt. Mittels der Verspiegelung 5 der Anschnittfläche 21 werden auch solche Strahlen reflektiert, für welche die Bedingung der Totalreflexion aufgrund eines steilen Einfallswinkels nicht mehr erfüllt ist. Mit der geometrischen Auslegung von Breite x und die Höhe z von erstem und zweiten optischen Element durch das erfindungsgemäße Aspektverhältnis wird erreicht, dass auch diese Strahlen durch die verspiegelte Anschnittfläche 21 zumindest teilweise in das zweite optische Element gelangen.

Die Leitung des Lichtes im ersten optischen Element 2 erfolgt mittels Totalreflektion des an der Lichteintrittsfläche 24 in den Lichtleiter 19 eingekoppelten Lichtes an den Wandungen 22 des Lichtleiters 19.

Für den Lichtleiter 19 werden Materialien bevorzugt, deren Brechungsindex für sichtbares mindestens 1,4, bevorzugt mindestens 1,5 beträgt.

In Schnittdarstellung werden die Wandungen 22 des ersten optischen Elements von zwei Seitenflächen 190, 191 gebildet. Die Seitenfläche 191 umfasst die Lichtaustrittsfläche 25 und ist daher länger als die Seitenfläche 190.

Die Lichteintrittsfläche 24 weist, gemessen in Richtung entlang des Schnitts der Lichteintrittsfläche 24 mit der Ebene der Lichtumlenkung an der Anschnittfläche 21, eine Breite x auf.

In einer bevorzugten Ausführungsform steht die Anschnittfläche 21 in einem Winkel von 45° zur Längsrichtung des Lichtleiters, so dass das im Lichtleiter 19 geleitete Licht um 90° an der Anschnittfläche 21 umgelenkt wird.

Das zweite optische Element 3, das beispielsweise ein weiterer Lichtleiter sein kann, weist eine Lichteintrittsapertur 30 auf, die sich entweder an der Lichtaustrittsfläche 25 des ersten optischen Elements 2 oder gegenüber der Lichtaustrittsfläche 25 befindet. Die Lichteintrittsapertur 30 weist, gemessen in Richtung entlang des Schnitts der Lichtaustrittsfläche 25 des ersten optischen Elements 2 mit der Ebene der Lichtumlenkung an der Anschnittfläche 21 des ersten optischen Elements 2, eine Höhe z auf.

Die Form der Lichteintrittsapertur 30 des zweiten optischen Elements 3 weist hierbei ein Aspektverhältnis von 0,8:1 bis 1,2:1, vorzugsweise von 0,9:1 bis 1,1:1, besonders bevorzugt von 1:1 für zwei zueinander senkrechte Richtungen auf.

Die Beziehung (1), mit welcher erfindungsgemäß die Breite x und die Höhe z miteinander verknüpft sind, führt allgemein, ohne Beschränkung auf das in Fig. 1 dargestellte Beispiel auch dazu, dass die Höhe $z_a$ der Anschnittfläche 21, gesehen in Richtung auf die Lichtaustrittsfläche 25 des ersten optischen Elements 2, beziehungsweise projiziert auf die Lichtaustrittsfläche 25 ungleich, insbesondere geringer ist, als die Höhe z der Eintrittsapertur des zweiten optischen Elements. Diese gegenüber der Höhe z der Eintrittsapertur des zweiten optischen Elements 3 geringere Höhe $z_a$ ist in Fig. 1 eingezeichnet. In Blickrichtung entgegen des geleiteten Lichts gesehen füllt also die Anschnittfläche die Eintrittsapertur nicht aus. Überraschend führt aber gerade diese Anordnung zu einer hohen Effizienz hinsichtlich des Anteils des in die Lichteintrittsapertur gelangenden Lichts.

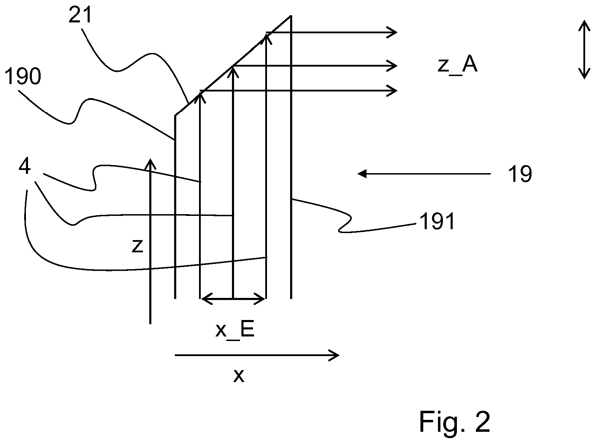

Fig. 2 zeigt in schematischer Darstellung den Strahlengang in einem Lichtleiter 19 mit Seitenflächen 190, 191 und Anschnittfläche 21. Lichtstrahlen 4 werden in den Lichtleiter 19 eingekoppelt und breiten sich z-Richtung bis zur Anschnittfläche 21 aus. An der Anschnittfläche 21 werden die Lichtstrahlen 4 in einem Winkel von 90° reflektiert, so dass sie sich nach der Reflexion an der Anschnittfläche 21 in x-Richtung ausbreiten.

Falls die einfallenden Lichtstrahlen 4 eine Breite x_E haben und die ausgehenden Strahlen nach der Reflexion eine Breite z_A, findet scheinbar eine Abbildung des Eingangs auf den Ausgang statt, so dass x_E = z_A gilt.

In Fig. 2 wird aus Gründen der Einfachheit lediglich der Fall parallel einfallender Lichtstrahlen 4 gezeigt. Allgemein fallen an der Lichteintrittsfläche 24 Lichtstrahlen auch schräg ein. Diese Lichtstrahlen werden auf ihrem weiteren Weg an den inneren Seiten der Wandung 22 total reflektiert. Dies hat zur Folge, dass von der inneren Seite der Anschnittfläche 21 ein Lichtkegel abgestrahlt wird.

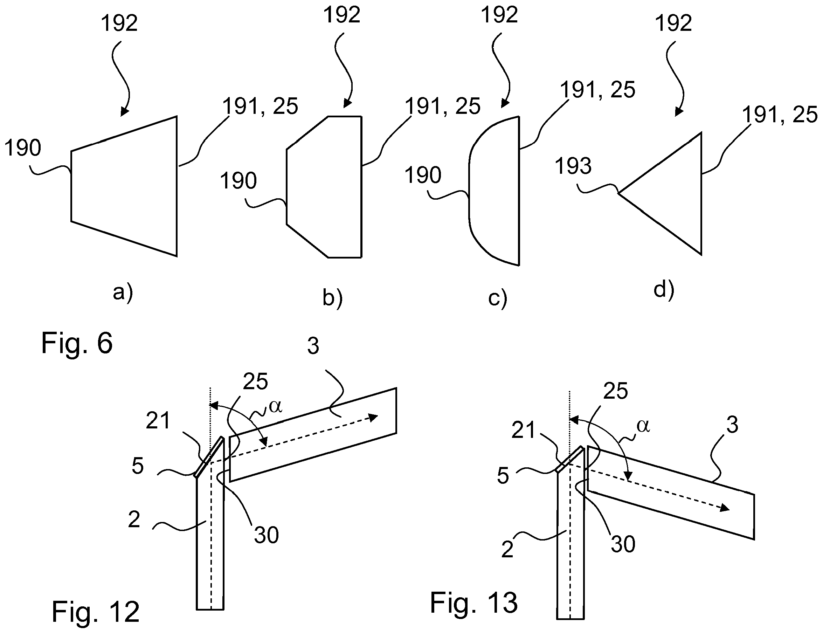

Die Fig. 12 und Fig. 13 zeigen zwei Ausführungsbeispiele, bei welchen anders als bei den Beispielen der Fig. 1 und Fig. 2 der Umlenkwinkel α ungleich 90° ist. Im speziellen ist der Umlenkwinkel bei dem Beispiel der Fig. 12 ein spitzer Winkel, beträgt also weniger als 90°. Damit stehen die Längsrichtungen des ersten und zweiten optischen Elements 2, 3 in einem stumpfen Winkel zueinander. Bei dem in Fig. 13 dargestellten Beispiel ist der Umlenkwinkel α ein stumpfer Winkel kleiner 90°. Dabei stehen die Längsrichtungen von ersten und zweitem optischen Element in einem spitzen Winkel zueinander.

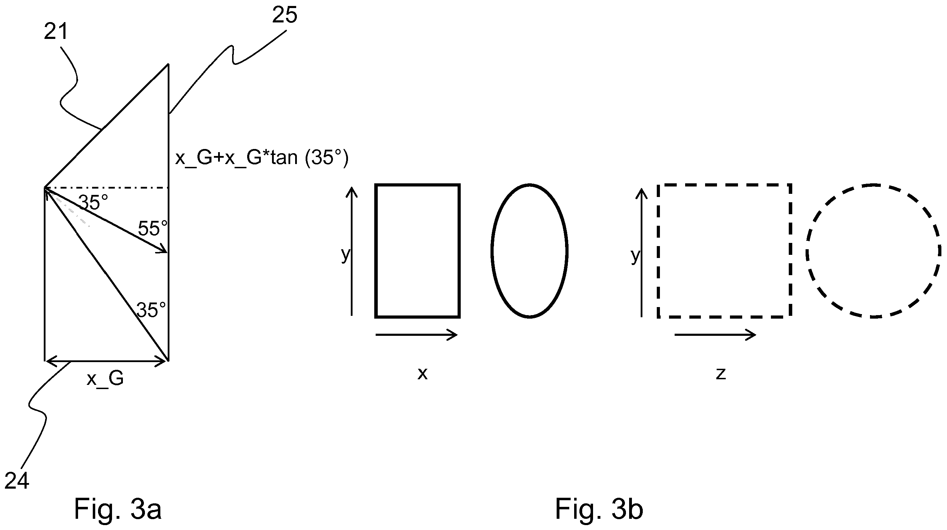

Fig. 3a zeigt die Geometrie eines Lichtmischers, der dem ersten optischen Element 2 in Fig. 1 entspricht, im Falle der Umlenkung von Licht um 90° zur Einkopplung in einen kreisrunden Lichtleiter, der dem zweiten optischen Element 3 der optischen Anordnung 1 aus Fig. 1 entspricht. Hierbei wird für das Material des Lichtmischers ein Brechungsindex für sichtbares Licht von n = 1,5 unterstellt.

Bei dem genannten Brechungsindex von n = 1,5 ergibt sich ein Grenzwinkel von 42°, der dem theoretisch maximal möglichen Öffnungswinkel des Lichtkegels im Lichtmischer bei Einkopplung über die plane Grundfläche entspricht. Berücksichtigt man Reflektionsverluste beim Einkoppeln sowie die typische lambertsche Abstrahlcharakteristik der LEDs, so ergibt sich realistischer Weise ein Öffnungswinkel von 35°, der den weitaus größten Teil der Strahlung umschließt.

Die Breite x der Lichteintrittsfläche sei im Folgenden auch mit x_E bezeichnet.

Mit den aufgeführten Werten ergibt sich für die Ausdehnung in z-Richtung z_A der Lichtaustrittsfläche z_A = x_E +x_E * tan(35°), bzw. x_E = z_A/(1+tan(35°)). Dies bedeutet, dass die Grundfläche des Lichtmischers, d.h. die Lichteintrittsfläche 24 des ersten optischen Elements 2 in Fig. 1 derart gewählt wird, dass die Ausdehnung in y-Richtung das ca. 1,7-fache der Ausdehnung in x-Richtung beträgt. Da sich die räumliche Ausdehnung des Strahlungskegels in y-Richtung nicht ändert, ist dann am Austritt ein Aspektverhältnis von 1:1 erreicht, da die z-Ausdehnung ebenfalls das 1,7-fache der x-Ausdehnung beträgt.

Fig. 3b zeigt diese Verhältnisse der Flächen von Ein- und Auskoppelfläche des ersten optischen Elements 2 für den bevorzugten Fall eines Zielaspektverhältnisses von 1:1, also einem Aspektverhältnis x/y der Lichteintrittsapertur des zweiten optischen Elements. Die Einkoppelflächen werden in Draufsicht, also in z-Richtung, der Richtung des eingekoppelten Lichts gezeigt, so dass sich die Einkoppelflächen in y- und x-Richtung erstrecken.

Die Einkoppelfläche entspricht der Lichteintrittsfläche 24 des ersten optischen Elements 2 in Fig. 1. Die Auskoppelfläche entspricht der Lichtaustrittsfläche 25 des ersten optischen Elements 2 in Fig. 1.

Im linken Teil von Fig. 3b sind schematisch zwei Einkoppelflächen, beziehungsweise Lichteintrittsaperturen des zweiten optischen Elements gezeigt, eine rechteckige und eine elliptische. Im rechten Teil von Fig. 3b werden die zugehörigen Auskoppelflächen gezeigt. Bei "richtiger" Wahl des Verhältnisses zwischen Ein- und Auskoppelfläche wird die rechteckige Einkoppelfläche auf eine quadratische Auskoppelfläche, und die elliptische Einkoppelfläche auf eine kreisförmige Auskoppelfläche abgebildet.

Für den genannten bevorzugten Fall eines Zielaspektverhältnisses von 1:1 ergibt sich eine besondere Form des prismatischen ersten optischen Elements. In diesem Fall folgt unabhängig davon, ob ein zweiten optisches Element nachgeschaltet ist, abhängig vom Umlenkwinkel des Lichts ein bestimmtes Aspektverhältnis der Lichteintrittsfläche. Im Speziellen ist ohne Beschränkung auf die speziellen Ausführungsbeispiele gemäß einem weiteren Aspekt der Erfindung ein optisches Element 2 in Gestalt eines oder umfassend einen mit einer Anschnittfläche 21 schräg angeschnittenen prismenförmigen Lichtleiter 19 vorgesehen, wobei das erste optische Element 2 Licht durch Totalreflexion an dessen Wandung 22 leitet, und eine Lichteintrittsfläche 24 aufweist, welche durch die nicht angeschnittene Stirnfläche des Lichtleiters 19 gebildet wird, Der Lichtleiter weist eine Lichtaustrittsfläche 25 auf, wobei die Lichtaustrittsfläche 25 durch einen Bereich der Wandung 22 an dem Ende des Lichtleiters 19 gebildet wird, an welchem die Anschnittfläche 21 angeordnet ist, wobei

- die Lichteintrittsfläche 24 des optischen Elements 2 eine Breite x gemessen in Richtung entlang des Schnitts der Lichteintrittsfläche 24 mit der Ebene der Lichtumlenkung an der Anschnittfläche 21 und eine Tiefe y gemessen senkrecht zur Breite x aufweisen, welche in folgender Beziehung zueinander stehen:

$$(5) \quad x/y \le 1{,}5 \cdot \left[ \tan\left(90° - \alpha/2\right) - \tan\left(90° - \left(2 \cdot \left[\alpha/2 + 90°\right] - \left[180° - \arcsin(1/n)\right]\right)\right) \right]^{-1}$$

wobei α wieder den Umlenkwinkel des Lichts an der Anschnittfläche 21 und n den Brechungsindex des Materials des optischen Elements 2 bezeichnen.

Wie auch bei den anderen Ausführungsformen der Erfindung muss die Lichtaustrittsfläche 25 keine separate Fläche sein, sondern es ist nur erforderlich, dass mindestens der Bereich der Wandung 22 gegenüber der Anschnittfläche lichtdurchlässig ist und damit als eine Lichtaustrittsfläche 25 geeignet ist.

Die vorstehend angegebene Beziehung (5) entspricht der Beziehung (1), wobei allerdings das Verhältnis x/y der Lichteintrittsfläche, anstelle das Verhältnis x/z von Breite der Lichteintrittsfläche 24 und der Höhe z der Lichteintrittsapertur des zweiten optischen Elements angegeben wird. Dies ist darin begründet, da bei einem Zielaspektverhältnis von 1:1 die Abmessungen y und z einer Lichteintrittsapertur gleich sind und auch die Tiefe y konstant ist, so dass sich hier z=y ergibt. Bevorzugt wird auch hier, dass das Aspektverhältnis der Lichteintrittsfläche nicht zu klein wird. In Weiterbildung der Erfindung ist daher vorgesehen, dass in Analogie zu Beziehung (2) für das Aspektverhältnis der Abmessungen x, y der Lichteintrittsfläche 24 gilt:

$$(6)$$
$$x/y \geq 0{,}85 \cdot \left[\tan(90° - \alpha/2) - \tan\left(90° - \left(2 \cdot [\alpha/2 + 90°] - [180° - \arcsin(1/n)]\right)\right)\right]^{-1}$$

Weiterhin wird auch hier eine Lichtumlenkung um 90° bevorzugt. In Weiterbildung der Erfindung ist daher entsprechend zu Beziehung (3) vorgesehen, dass die Anschnittfläche in einem Winkel von 45° zur Lichteintrittsfläche angeschnitten ist, so dass der Umlenkwinkel des Lichts 90° beträgt, wobei für das Verhältnis der Breite x zur Tiefe y der Lichteintrittsfläche 24 des Lichtleiters gilt:

$$(7) \quad x/y \leq 1{,}5 \cdot \left[1 + \tan(\arcsin(1/n))\right]^{-1}.$$

In Analogie zu Beziehung (4) wird vorzugsweise das Aspektverhältnis zusätzlich begrenzt auf:

$$(8) \quad x/y \geq 0{,}85 \cdot \left[1 + \tan(\arcsin(1/n))\right]^{-1}$$

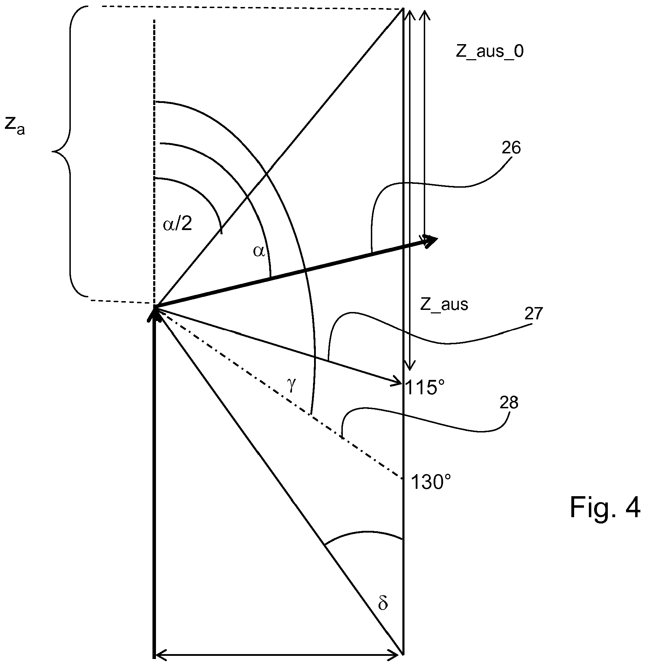

Fig. 4 zeigt die Geometrie eines Lichtmischers, beziehungsweise des ersten optischen Elements für den Fall eines allgemeinen Umlenkwinkels $\alpha$. In dieser Fig. bezeichnet Z_aus_0 die Austrittshöhe ohne Berücksichtigung des Strahlenkegels. Ferner sind einige ausgezeichnete Lichtstrahlen dargestellt: Der reflektierte Strahl 26 eines ursprünglich unter 0° laufenden Strahls, der reflektierte Strahl 27 eines unter 35° im Glas laufenden Strahls sowie die Oberflächennormale 28 des Spiegels.

Für einen solchen Umlenkwinkel gilt gemäß der Erfindung für die Maße x des ersten optischen Elements und z der Eintrittsapertur des zweiten optischen Elements die oben angegebene Beziehung (1). Vorzugsweise ist dabei das Verhältnis x/z auch nach unten hin durch die oben angegebene Beziehung (2) begrenzt.

Die folgende Tabelle stellt alle Größen für die Berechnung des Falles eines allgemeinen Umlenkwinkels $\alpha$ zusammen. In der ersten Spalte sind die Bezeichnungen der Größen zusammengestellt, während die zweite Spalte das für die jeweilige Größe verwendete Symbol enthält. Die dritte Spalte enthält die für die Berechnung verwendeten beispielhaften Werte, die vierte Spalte das Ergebnis der Berechnung. Die fünfte Spalte enthält die Ergebnisse einer vereinfachten Rechnung für einen Umlenkwinkel $\alpha$ von 90° und ein Zielaspektverhältnis von 1.

| Bezeichnung | Symbol | Bsp | Rechnung | Vereinfachte Rechnung $\alpha$=90°, Zielaspektverh. 1 |
|---|---|---|---|---|
| Brechzahl Glas | N | 1,74 | Vorgabe | |
| Umlenkwinkel | $\alpha$ | 80° | Vorgabe | 90 |
| Auskoppel-Y | Y_aus | Vorgabe | Vorgabe | |
| Auskoppel-Z | Z_aus | Vorgabe | Vorgabe | |
| Lage der Spiegelfläche | $\beta$ | 40° | $\alpha/2$ | 45 |
| OF-Normale Spiegel | Y | 130° | $\alpha/2+90°$ | 135 |
| Eintrittswinkel zur OF-Normale der Grundfläche | $\delta$ | 35° | Arcsin(1/n) | Arcsin(1/n) |
| Lichtrichtung im Bezugssystem | | 155° | 180°-Arcsin(1/n) | 180°-Arcsin(1/n) |
| Richtung Grenzstrahl | $\Phi$ | 105° | 2*$\gamma$-(180°-Arcsin(1/n)) = 2*($\alpha$/2+90°)-(180°-Arcsin(1/n)) | 90°+Arcsin(1/n)) |

(fortgesetzt)

| Bezeichnung | Symbol | Bsp | Rechnung | Vereinfachte Rechnung $\alpha$=90°, Zielaspektverh. 1 |
|---|---|---|---|---|
| Auskoppel-Z bei paralleler Strahlung | Z_aus_0 | | X_G * (tan(90°-$\alpha$/2)-tan (90°-$\alpha$)) =X_G*(tan(90°-$\beta$)-tan(90°-$\alpha$)) | X_G |
| Auskoppel-Z mit Strahlkegel | Z_aus | | X_G *(tan(90°-$\beta$)-tan(90°-$\phi$))= X_G * (tan(90°-$\alpha$/2)-tan(90°-(2*($\alpha$/2+90°)-(180°-Arcsin(1/n)))) | X_G*(1+tan(arcsin(1/n))) |
| Zielaspektverh. | A_soll | 1 | Z_aus/ Y_aus | 1 |
| Einkoppel- Y | Y_G | | Y_aus | |
| Einkoppel-X | X_G | | A_Soll *Y_G/ (tan(90-$\beta$)-tan(90-$\phi$)) | Y_G/(1+tan(arcsin(1/n))) |

Für das Verhältnis x/z der Breite x der Lichteintrittsfläche 24 (in der Tabelle als x_G bezeichnet) zur Höhe z der Lichteintrittsapertur 30 gilt erfindungsgemäß für einen allgemeinen Umlenkwinkel $\alpha$ unabhängig vom Zielaspektverhältnis, also dem Aspektverhältnis der Eintrittsapertur:

$$(9)$$

$$x / z \leq 1,5 \cdot \left[ \tan\left(90° - \alpha / 2\right) - \tan\left(90° - \left(2 \cdot \left[\alpha / 2 + 90°\right] - \left[180° - \arcsin\left(1/n\right)\right]\right)\right) \right]^{-1}$$

Bevorzugt wird ein Umlenkwinkel im Bereich von 75° bis 105°, d.h. ein Bereich von 90° ± 15°. Es hat sich herausgestellt, dass bei einer größeren Abweichung des Umlenkwinkels vom Wert 90° die Verzerrung und die internen Reflektionsverluste zu groß werden.

Wie bereits oben zu Fig. 1 erläutert, ist die Höhe $z_a$ der auf die Lichteintrittsapertur projizierten Anschnittfläche 21 des ersten optischen Elements 2 kleiner als die Höhe z der Eintrittsapertur 30. Die Höhe z der Eintrittsapertur 30 entspricht dabei der Größe z_aus in Fig. 4. Für das Verhältnis x/$z_a$, also dem Verhältnis von Breite x der Lichteintrittsfläche des ersten optischen Elements 2 zur Höhe $z_a$ der auf die Lichteintrittsapertur projizierten Anschnittfläche 21 gilt gemäß einer Weiterbildung der Erfindung allgemein:

$$(10) \quad x = z_a \cdot \tan\left(\alpha / 2\right).$$

Für das Verhältnis der Höhe $z_a$ zur Höhe z ergibt sich damit aus Gleichung (1) und Gleichung (10):

$$(11)$$

$$z_a / z \leq 1,5 \cdot \left[ \tan\left(\alpha / 2\right) \cdot \left[ \tan\left(90° - \alpha / 2\right) - \tan\left(90° - \left(2 \cdot \left[\alpha / 2 + 90°\right] - \left[180° - \arcsin\left(1/n\right)\right]\right)\right) \right] \right]^{-1}$$

Wie aus dem Beispiel der Fig. 1 ersichtlich, kann die Höhe $z_a$ auch als Höhe der Anschnittfläche gemessen in Längsrichtung des ersten optischen Elements oder als die Länge des mit der Anschnittfläche versehenen Längsabschnitts des ersten optischen Elements 2 definiert werden.

Wie oben zu Gleichung (2) erläutert, sinkt allerdings der Zuwachs an Effizienz für große Werte der Abmessung z, während das zweite optische Element immer voluminöser wird. Es ist daher gemäß einer Weiterbildung der Erfindung von Vorteil, auch für das Verhältnis gemäß Gleichung (11), welches mit größer werdender Höhe z kleiner wird, ein Mindestmaß vorzusehen. Aus einer Kombination der Gleichungen (10) und (2) folgt damit gemäß einer Weiterbildung der Erfindung die zusätzliche Bedingung:

$$(12)$$

$$z_a / z \geq 0,85 \cdot \left[ \tan\left(\alpha / 2\right) \cdot \left[ \tan\left(90° - \alpha / 2\right) - \tan\left(90° - \left(2 \cdot \left[\alpha / 2 + 90°\right] - \left[180° - \arcsin\left(1/n\right)\right]\right)\right) \right] \right]^{-1}$$

Für den bevorzugten Spezialfall eines Umlenkwinkels $\alpha$=90° ergibt sich x = $z_a$. Damit gilt dann

$$(13) \quad x/z = z_a/z.$$

Aus Gleichung (11) folgt dann

$$(14) \quad z_a/z \leq 1{,}5 \cdot \left[1 + \tan\left(\arcsin\left(1/n\right)\right)\right]^{-1}$$

und aus Gleichung (12) als vorteilhafte weitere Bedingung für den Spezialfall a=90°

$$(15) \quad z_a/z \geq 0{,}85 \cdot \left[1 + \tan\left(\arcsin\left(1/n\right)\right)\right]^{-1}$$

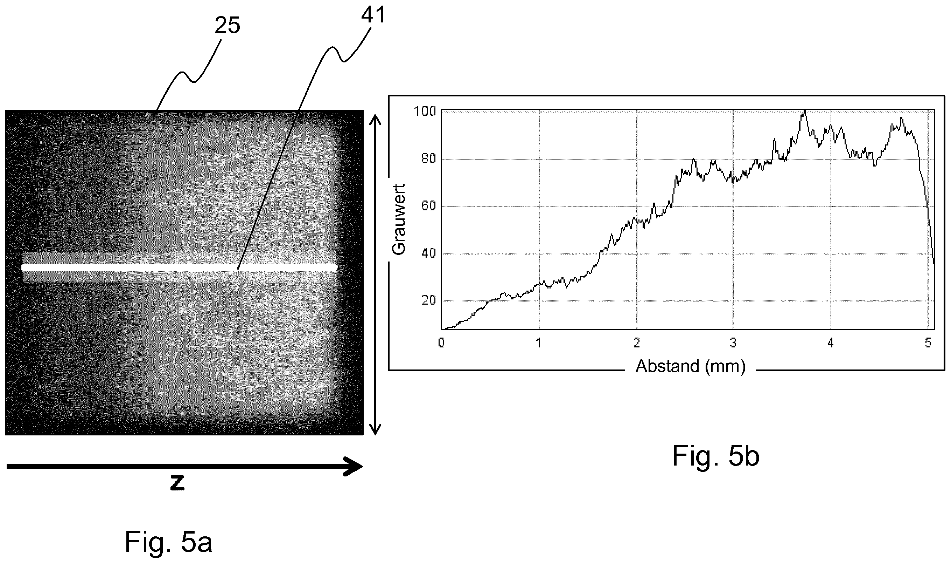

Die Fig. 5a und 5b zeigen ein Messbeispiel für das Glas LIBA2000 mit einem Brechungsindex von n = 1,5215, woraus sich ein Grenzwinkel von 41° ergibt. Der Umlenkwinkel wurde als 90° gewählt. Mittels der vorangegangenen Formeln ergibt sich für ein Ausgabeverhältnis von 1:1 ein berechnetes Aspektverhältnis von x_G/y_G = 0,534. Das verwendete Prisma wies ein Verhältnis von x_G/y_G = 3,66 mm / 5,00 mm = 0,732 auf.

Wird als Lichtquelle eine LED verwendet, so ist diese im Allgemeinen ein sogenannter Lambert'scher Strahler, was bedeutet, dass die Leuchtfläche der LED unabhängig von der Betrachtungsrichtung als gleich hell erscheint.

Das reale Verhältnis x G/y_G kann größer gewählt werden, da die als Lichtquelle verwendete LED als lambert'scher Strahler bei großen Winkeln nur wenig Strahlung emittiert. Ferner wird Strahlung, die unter großen Winkeln auf die Grundfläche des Prismas trifft, zum großen Teil reflektiert.

Fig. 5a zeigt in vertikaler Draufsicht die Verteilung der Lichtintensität an der Lichtaustrittsfläche 25 der optischen Anordnung.

Fig. 5b zeigt in einem Diagramm den Grauwert der Lichtstrahlung entlang der Linie 41 in Fig. 5a. Auf der horizontalen Achse ist der Abstand von der linken Seitenkante der Lichtaustrittsfläche 25 abgetragen.

Wird eine erfindungsgemäße Anpassung der Aspektverhältnisse der Lichteintrittsapertur des zweiten optischen Elements und der Lichteintrittsfläche des ersten optischen Elements nicht vorgenommen, sind also die Abmessungen x des ersten optischen Elements und z des zweiten optischen Elements gleich, so wird bei dem in Fig. 5b gezeigten Beispiel nur die Lichtintensität bei Werten der z-Koordinate größer als 2, also die im Bereich von 2 bis 5 Millimetern austretende Lichtintensität in das zweite optische Element eingekoppelt. Die erfindungsgemäße Anordnung ist demgegenüber so ausgebildet, dass auch Lichtintensität aus dem Bereich zwischen 0 und 2 Millimetern eingekoppelt wird. Es ist damit ersichtlich, dass mit der Erfindung eine höhere Effizienz erzielt wird.

In einer bevorzugten Ausführungsform weist der Lichtleiter 19 des ersten optischen Elements 2 die Gestalt eines Prismas 20 auf, wobei dessen Lichteintrittsfläche 24 durch die nicht angeschnittene Grundfläche des Prismas 20 gebildet wird.

In optischen Anordnungen nach dem Stand der Technik, die Licht mischen und umlenken, werden Lichtleiter mit einem Querschnitt bzw. einer Grundfläche (= Lichteintrittsfläche 24 der erfindungsgemäßen optischen Anordnung 1) verwendet, der auf geometrischen Grundformen basiert. Insbesondere werden kreisförmige Querschnitte verwendet. Um eine bessere Durchmischung des einfallenden Lichtes zu erreichen werden regelmäßige Sechs-Ecke verwendet. Die Grundformen sind für reine Lichtmischer technisch durchaus vorteilhaft.

Diese Querschnitte führen bei einer zusätzlichen Umlenkung jedoch zu einer geringen Effizienz des optischen Systems. Diese Effizienzverluste sind auf verschiedene ungünstige Eigenschaften dieser Systeme zurückzuführen.

Diese Nachteile sollen am Beispiel einer 90°-Umlenkung von z- in x-Richtung erläutert werden.

Die höchste Intensität wird senkrecht zur Oberfläche der Grundfläche eingekoppelt und läuft damit parallel zur z-Achse im optischen System. Nach der Umlenkung läuft diese sich in z-Richtung. Dies ist die gewünschte Richtung zur Auskopplung. Um eine Ablenkung aus der gewünschten Richtung zu vermeiden, muss die Auskoppelfläche - also die dem Spiegel gegenüberliegende Fläche -senkrecht zur x-Achse sein. Die Fläche muss also eine Ebene in x-y-Richtung sein.

Mit einer runden oder sechs-eckigen Grundfläche des Lichtleiters ist dies nicht realisierbar.

Ein weiterer Nachteil einer kreisrunden oder sechseckigen Grundfläche ist, dass ein folgendes optisches Element mit einer planen Eintrittsfläche, wie z.B. ein Lichtleiter oder eine plankonvexe Linse, nicht an jeder Austrittsstelle der Strahlung in größtmögliche Nähe der Austrittsfläche gebracht werden kann. Dadurch kann die austretende Strahlung divergieren, woraus entweder eine Verdünnung der Etendue oder die Notwendigkeit eines weiteren optischen Elements zur Sammlung der Strahlung folgt.

Zur Vermeidung der genannten Nachteile wird erfindungsgemäß in der folgenden Weise von regelmäßigen geometrischen Grundformen abgewichen.

Die Querschnittfläche des Lichtleiters 19 hat eine Form, deren Abmessung sich in Richtung der vom zweiten optischen Element 3 abgewandten Seite zum zweiten optischen Element 3 hin monoton erweitert und dabei in zumindest einem Abschnitt entlang dieser Richtung streng monoton erweitert.

Es sei in diesem Zusammenhang angemerkt, dass ein rechteckiger Querschnitt einen Grenzfall darstellt, da die Breite der Grundfläche des Lichtleiters konstant ist. Eine konstante Funktion ist zwar monoton, aber anders als gemäß der vorstehend genannten Weiterbildung der Erfindung nicht streng monoton.

Im Falle einer Grundfläche in Form eines regelmäßigen Sechs-Ecks wäre die Abmessung der Grundfläche in einem Bereich sogar streng monoton fallend, was zu den genannten Nachteilen führt.

In Fig. 6 werden vier verschiedene, Grundflächen, beziehungsweise Querschnittsflächen 192 des Lichtleiters 19 gemäß weiterer Ausführungsformen der Erfindung gezeigt. Diese Ausführungsformen basieren darauf, dass die Querschnittfläche des Lichtleiters 19 eine Form aufweist, deren Abmessung sich in Richtung der vom zweiten optischen Element 3 abgewandten Seite zum zweiten optischen Element 3 hin monoton erweitert und dabei in zumindest einem Abschnitt entlang dieser Richtung streng monoton erweitert.

Teil a) von Fig. 6 zeigt eine Querschnittfläche, deren Breite über die gesamte Ausdehnung des Lichtleiters streng monoton steigt.

Teil b) von Fig. 6 zeigt eine Querschnittfläche, deren Breite, in der Zeichnung von links nach rechts, zunächst streng monoton steigt und dann konstant ist.

Bei den Ausführungsbeispielen der Teile a) und b) von Fig. 6 ist der Lichtleiter aus ebenen Wandabschnitten aufgebaut. Es ist ebenso aber auch möglich, gerundete Wandungen vorzusehen. Ein Beispiel dazu zeigt Teil c) der Fig. 6. Bei der Querschnittfläche des Lichtleiters gemäß diesem Ausführungsbeispiel sind die Wandabschnitte, in denen die Querschnittabmessung streng monoton ansteigt, gerundet.

Teil d) von Fig. 6 zeigt eine dreieckige Grundfläche. Hier ist demgemäß keine der Lichtaustrittsfläche 25 gegenüberliegende Fläche vorhanden, sondern der Querschnitt erweitert sich ausgehend von einer Kante 193 zur Seitenfläche 191 hin.

In der Seitenfläche 191 liegt, wie bereits anhand von Fig. 1 verdeutlicht, auch die Lichtaustrittsfläche 25. Allen Ausführungsbeispielen der Fig. 6 ist gemeinsam, dass aufgrund der monotonen und zumindest abschnittsweise streng monotonen Erweiterung der Abmessung des Querschnitts zur Lichtaustrittsfläche 25 hin (also bei der Orientierung der dargestellten Ausführungsbeispiele von links nach rechts) an der Lichtaustrittsfläche 25, beziehungsweise an der zugehörigen Seitenfläche 191 der Querschnitt 192 seine maximale Abmessung aufweist.

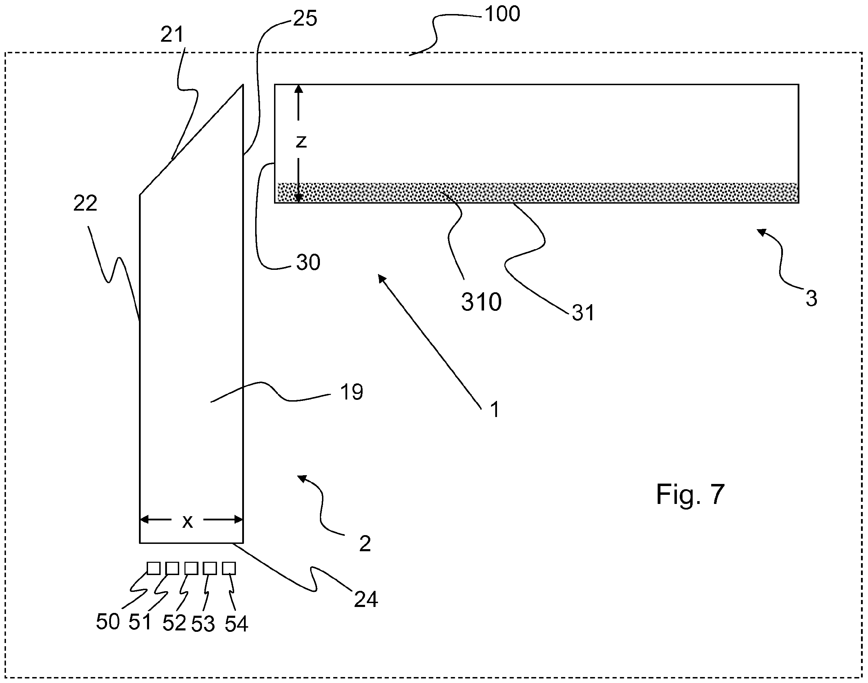

Fig. 7 zeigt in schematischer Darstellung eine erfindungsgemäße Beleuchtungseinrichtung 100 mit optischer Anordnung 1. Angeordnet vor der Lichteintrittsfläche 24 des ersten optischen Elements 2 der optischen Anordnung 1, weist die Beleuchtungseinrichtung 100 mehrere Leuchtelemente 50, 51, 52, 53, 54 auf, deren Licht in die Lichteintrittsfläche 24 eingekoppelt wird. Bei den Leuchtelementen 50, 51, 52, 53, 54 handelt es sich beispielsweise um Halbleiterleuchtelemente, wie LEDs. Die Leuchtelemente 50, 51, 52, 53, 54 unterscheiden sich in der Farbe des von ihnen abgegebenen Lichts. In diesem Sinne werden auch unterschiedliche Weißtöne als unterschiedliche Farben, beziehungsweise Farbtöne erachtet. Beispielsweise können zwei Weißlicht-LEDs vorgesehen werden, die Licht unterschiedlicher Farbtemperaturen abgeben. Beispielhaft seien zwei Weißlicht-LEDs genannt, die Weißlicht mit 2700 K und 7000 K emittieren.

Durch Verwendung einer vierfarbigen LED-Anordnung kann beispielsweise ein großer Farbraum abgedeckt werden. Dabei wird zumindest eine rot emittierende, zumindest eine grün oder gelb emittierende, zumindest eine blau emittierende und zumindest eine weißes Licht emittierende Leuchtdiode vorgesehen. So kann beispielsweise durch Beimischung des Lichts einer oder mehrerer der rot-, grün- und blau emittierenden Leuchtdioden zum Licht einer oder mehrerer weiß emittierender Leuchtdioden die Farbtemperatur des weißen Lichts variiert werden. Für Leuchtdioden und Laser als Halbleiter-Leuchtelemente werden folgende Spektralbereiche des emittierten Lichts bevorzugt:

blaues Licht: 430 nm bis 480 nm Wellenlänge,
grünes Licht: 500 nm bis 560 nm Wellenlänge,
rotes Licht: mindestens 600 nm, vorzugsweise 600 nm bis 660 nm Wellenlänge.

Im Falle der Beleuchtungseinrichtung 100 wird das zweite optische Element 3 der optischen Anordnung 1 durch einen Lichtleiter 31 gebildet, dessen der Lichtaustrittsfläche 25 des ersten optischen Elements 2 zugewandte Stirnfläche die Lichteintrittsapertur 30 bildet. Abhängig vom konkreten Aufbau in der Anwendung können die Reflexionsverluste durch eine Verkittung der Flächen 25 und 30 minimiert und so die Gesamteffizienz gesteigert werden. Dies ist jedoch mit zusätzlichen Kosten und ggf. mit Einschränkungen auf die Temperaturwechselbelastungsbeständigkeit verbunden, wenn die Grundkonstruktion der Leuchte eine andere Wärmeausdehnung als der Glasstab hat.

Entlang seiner Ausdehnungs-, beziehungsweise Längsrichtung weist der Lichtleiter 31 Licht streuende Strukturen 310 auf, die das in den Lichtleiter 31 eingekoppelte Licht teilweise so streuen, dass der Grenzwinkel der Totalreflexion überschritten wird, so dass das gestreute Licht aus der Mantelfläche des Lichtleiters 31 austritt. Der Lichtleiter 31 wird damit zu einer entlang seiner Länge leuchtenden linienförmigen oder langgestreckten Lichtquelle. Besonders geeignet sind lichtstreuende Strukturen, die auf der Mantelfläche des Lichtleiters aufgebracht sind. Geeignet ist hierzu eine diffus reflektierende Beschichtung. Die Beschichtung weist dabei reflektierende Partikel als lichtstreuende Strukturen auf.

Wie in Fig. 7 gezeigt, können die lichtstreuenden Strukturen 310 auch nur auf einem Teilbereich der Mantelfläche aufgebracht sein. Damit wird der Lichtaustritt auf der gegenüberliegenden, nicht beschichteten Seite des Lichtleiters 31 begünstigt. Dies ist von Vorteil, wenn der Lichtleiter an oder in einer Wand, Decken oder Boden angeordnet wird. Ohne Beschränkung auf das spezielle in Fig. 7 gezeigten Beispiel sind die lichtstreuenden Strukturen bevorzugt auf der den Leuchtelementen 50, 51, 52, 53, 54 zugewandten Seite der Mantelfläche angeordnet. Auf diese Weise kann das erste optische Element in der Wand, Decke oder im Boden eingebaut werden und wird damit verdeckt.

Es ist ersichtlich, dass im Bereich des Prismas im Normalfall kein Licht in z-Richtung abgegeben wird, wie es entlang des Stabes durch die Beschichtung geschieht. Hierdurch entstehen bei der Kombination mehrerer solcher Lichtquellen Unterbrechungen der leuchtenden Linie, die ggf. unerwünschte Effekte im Lichtfeld erzeugen. Diese Effekte können reduziert werden, wenn die Verspiegelung auf Fläche 21 so ausgelegt ist, dass ein Teil des Lichts in z-Richtung bzw. in eine Richtung mit einer wesentlichen z-Komponente durchgelassen wird. Dies ist z.B. besonders einfach dadurch zu realisieren, dass nicht die gesamt Fläche verspiegelt ist (z.B. durch Auslassung des Randbereichs).

Der Lichtleiter 19 des ersten optischen Elements 2 und/oder der Lichtleiter 31 des zweiten optischen Elements 3 können ein Glas- oder Kunststoffstab sein. Die Lichtleiter können mit einem Material mit niedrigerem Brechungsindex ummantelt oder auch zumindest teilweise mantellos sein.

Die Leuchtelemente 50, 51, 52, 53, 54 sind an eine Steuerungselektronik (hier nicht dargestellt) angeschlossen, die es erlaubt die Helligkeit der Leuchtelemente, auch getrennt voneinander, zu steuern.

Das Koordinatensystem ist bei den vorstehend beschriebenen Ausführungsformen ohne Einschränkung der Allgemeinheit so gewählt, dass die Ablenkung des Lichts an der Anschnittfläche in der x-z-Ebene stattfindet. Die Ausdehnungen des ersten und zweiten optischen Elements in y-Richtung sind bevorzugt gleich. Eine geringere Ausdehnung des ersten optischen Elementes in y-Richtung reduziert die Einkoppelfläche und damit die Effizienz der Einkopplung bzw. bedeutet eine unnötig große Auslegung des zweiten optischen Elementes und damit ungünstigere Eigenschaften zum Beispiel bzgl. Bauraum, Gewicht und Kosten.

Eine größere Ausdehnung des ersten optischen Elementes in y-Richtung in Bezug auf das zweite optische Element bedeutet, dass Licht seitlich am zweiten optischen Element vorbeigeleitet wird und damit die Effizienz reduziert ist.

Geringe Abweichungen der Tiefe y des ersten optischen Elements (oben auch als $y\_G$ bezeichnet), beziehungsweise der Lichteintrittsfläche und der Tiefe y der Lichteintrittsapertur des zweiten optischen Elements können andererseits aus baulichen Gründen von Vorteil sein. Allgemein, ohne Beschränkung auf die dargestellten Ausführungsbeispiele ist daher ierfindungsgemäß vorgesehen, dass die Tiefe $y\_G$ der Lichteintrittsfläche 24 des ersten optischen Elements und die Tiefe $y2$ der Lichteintrittsapertur des zweiten optischen Elements in einem Verhältnis $y\_G/y2$ stehen, welches im Bereich von 0,85 bis 1,15, vorzugsweise im Bereich von 0,9 bis 1,11 liegt.

Ebenso ist es aus den vorgenannten Gründen allgemein günstig, auch die Tiefen der Lichteintrittsfläche 24 und der Lichtaustrittsfläche 25 anzupassen. Demgemäß gilt in Weiterbildung der Erfindung für den Lichtleiter des ersten optischen Elements, dass das Verhältnis $y/y\_{aus}$ der Tiefe y (oben auch $y\_G$ genannt) der Lichteintrittsfläche 24 des ersten optischen Elements und der Tiefe $y\_{aus}$ der Lichtaustrittsfläche 25 im Bereich von 0,85 bis 1,15, vorzugsweise im Bereich von 0,9 bis 1,11 liegt.

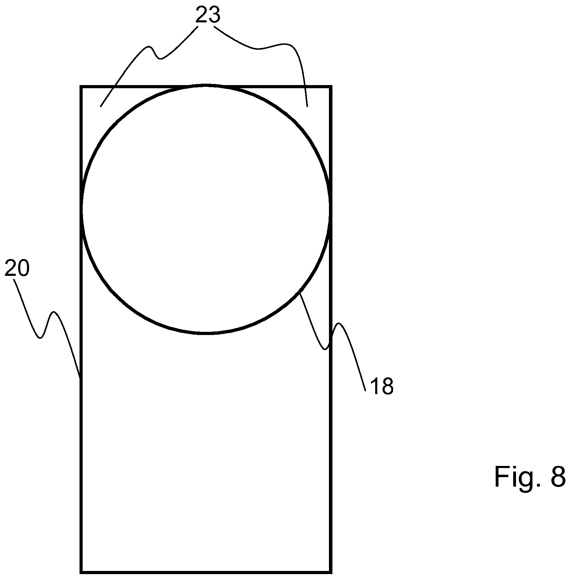

Fig. 8 zeigt, in Darstellung entlang der x-Achse, den Fall, dass die Geometrie von Prisma 20 und Lichtleiter 28 des zweiten optischen Elements 3 deckungsgleich sind. Aufgrund der rechteckigen Geometrie des Prismas 20 und der kreisförmigen des Lichtleiters 18 verbleiben nicht überdeckte Bereiche 23.

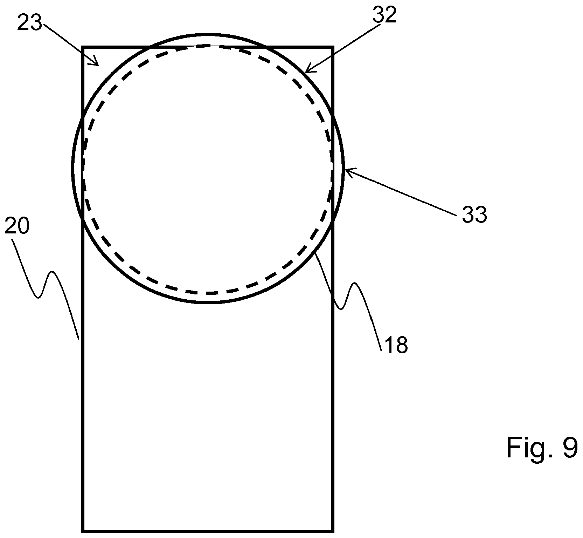

Da die beiden Geometrien nicht deckungsgleich sein müssen, ist z.B. im Fall eines runden Lichtleiters eine etwas größere Ausdehnung in z-Richtung vorteilhaft, da die positiven Effekte die negativen überwiegen. Dieser Fall ist in Fig. 9 gezeigt. Es entsteht ein zusätzlicher überdeckter Bereich 32 sowie ein nicht gefüllter Bereich 33 des Lichtleiters 18 des zweiten optischen Elements 3.

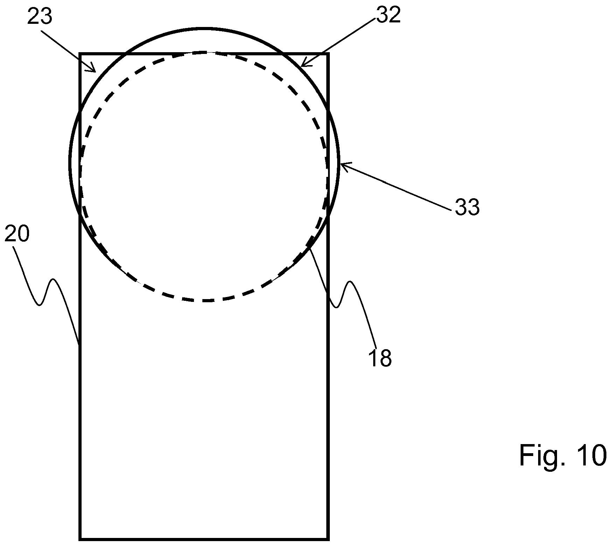

Im gleichen Zusammenhang ist ebenfalls eine geringfügige Verschiebung des zweiten optischen Elementes in z-Richtung nach oben günstig, da die Bereiche hoher Intensität im oberen Bereich der Austrittsfläche liegen, wie später detaillierter im Zusammenhang mit den Figuren 5a und 5b beschrieben wird. Fig. 10 zeigt diesen Fall eines in z-Richtung vergrößerter und nach oben verschobenen runden Lichtleiters 18.

Anhand der Fig. 8 bis Fig. 10 ist auch ersichtlich, dass die Querschnittform der Lichteintrittsapertur des zweiten optischen Elements von der Querschnittform der Lichteintrittsfläche des ersten optischen Elements nicht nur hinsichtlich des Aspektverhältnisses abweicht, sondern auch eine andere geometrische Figur sein kann. So kann die Lichteintrittsfläche allgemein eine polygonale Form haben, während die Lichteintrittsapertur des zweiten optischen Elements, wie vorzugsweise die Lichteintrittsfläche eines Lichtleiters eine runde Form haben kann.

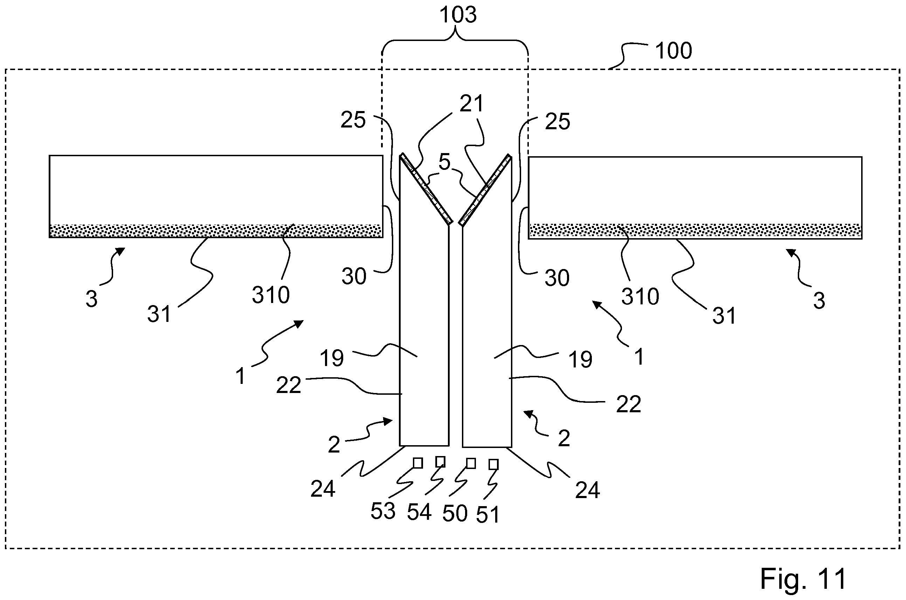

Fig. 11 zeigt eine Weiterbildung der in Fig. 7 dargestellten Ausführungsform einer Beleuchtungseinrichtung 100. Bei dieser Beleuchtungseinrichtung 100 sind zumindest zwei, vorzugsweise mehrere optische Anordnungen vorgesehen. Jede der optischen Anordnungen weist einen Lichtleiter 31 als zweites optisches Element auf. Dabei sind die Lichtleiter 31 in einer Reihe, beziehungsweise hintereinander so angeordnet, dass deren Lichteintrittsaperturen 30 zueinander beabstandet sind. Die ersten optischen Elemente 2 der optischen Anordnungen 1 sind nebeneinander so angeordnet, dass die Lichtaustrittsflächen 25 im Zwischenraum 103 zwischen den Lichteintrittsaperturen 30 den gegenüberliegenden Lichteintrittsaperturen 30 der Lichtleiter 3 zugewandt sind und in entgegengesetzte Richtungen weisen. Für die ersten optischen Elemente sind jeweils eigene, vorzugsweise mehrere Leuchtelemente 50, 51 und 53, 54 vorgesehen, die sich hinsichtlich der Farbe des abgegebenen Lichts voneinander unterscheiden und die ersten optischen Elemente 2 sind weiterhin vorzugsweise so angeordnet, dass die einander zugewandten Flächen der Wandungen 22 der ersten optischen Elemente 2 voneinander getrennt sind, sich insbesondere nicht flächig berühren, so dass jedes optische Element das Licht der ihr zugeordneten Leuchtelemente leitet und ein Übersprechen des in der einen Beleuchtungseinrichtung geleiteten Lichts in die benachbarte Beleuchtungseinrichtung 1 vermieden wird. Damit können die einzelnen Beleuchtungseinrichtungen unabhängig voneinander hinsichtlich der Helligkeit und/oder Farbe eingestellt werden. Durch die Reihenanordnung der Lichtleiter 31 wird weiterhin eine langgestreckte, linienförmige Lichtquelle erhalten. Um auch Licht in den Zwischenraum 103 gelangen zu lassen, kann beispielsweise in Weiterbildung der Erfindung vorgesehen sein, dass die Verspiegelungen 5 auf den Anschnittflächen teildurchlässig sind. Dies kann durch eine teilreflektierend ausgebildete Verspiegelungen 5 und/oder durch eine nur teilweise mit einer Verspiegelung 5 belegte Anschnittfläche 5 erzielt werden.

Es ist dem Fachmann ersichtlich, dass die Erfindung nicht auf die Ausführungsbeispiele beschränkt ist, sondern in vielfältiger Weise im Rahmen des Gegenstands der Ansprüche variiert werden kann. So sind in den Ausführungsbeispielen der Fig. 1 und Fig. 7 erste optische Elemente 2 vorgesehen, welche das Licht um 90° in Richtung auf das zweite optische Element 3 umlenken. Hier können allerdings auch andere Winkel verwendet werden.

Bezugszeichenliste

| | |
|---|---|
| 1 | Optische Anordnung |
| 2 | Erstes optisches Element |
| 3 | Zweites optisches Element |
| 4 | Lichtstrahl |
| 5 | Verspiegelung |
| 18 | Lichtleiter |
| 19 | Lichtleiter |
| 20 | Prisma |
| 21 | Anschnittsfläche |
| 22 | Wandung |
| 23 | Nicht überdeckter Bereich |
| 24 | Lichteintrittsfläche |
| 25 | Lichtaustrittsfläche |
| 26 | Reflektierter Strahl eines ursprünglich unter 0° laufenden Strahls |
| 27 | Reflektierter Strahl eines unter 35° im Glas laufenden Strahls |
| 28 | Oberflächennormale des Spiegels |
| 30 | Lichteintrittsapertur |
| 31 | Lichtleiter |
| 32 | Zusätzlich überdeckter Bereich |
| 33 | nicht gefüllter Bereich |
| 41 | Schnittlinie |
| 50,51,52 53, 54 | Leuchtelemente |
| 100 | Beleuchtungseinrichtung |
| 103 | Zwischenraum |
| 190, 191 | Seitenflächen |
| 192 | Querschnittfläche von 19 |
| 193 | Kante |
| 310 | lichtstreuende Strukturen |

**Patentansprüche**

1.  Optische Anordnung (1) mit

    - einem ersten optischen Element (2) in Gestalt eines oder umfassend einen mit einer Anschnittfläche (21) schräg angeschnittenen Lichtleiters (19) und
    - einem zweiten optischen Element (3), wobei das erste optische Element (2)
    - Licht durch Totalreflexion an dessen Wandung (22) leitet, und
    - eine Lichteintrittsfläche (24) aufweist, welche durch die nicht angeschnittene Stirnfläche des Lichtleiters (19) gebildet wird, und
    - eine Lichtaustrittsfläche (25) aufweist, wobei die Lichtaustrittsfläche (25) durch einen Bereich der Wandung (22) an dem Ende des Lichtleiters (19) gebildet wird, an welchem die Anschnittfläche (21) angeordnet ist,
    - das zweite optische Element (3) eine Lichteintrittsapertur (30) aufweist, welche an der Lichtaustrittsfläche (25) des ersten optischen Elements (2) oder in Gegenüberstellung der Lichtaustrittsfläche (25) des ersten optischen Elements (2) angeordnet ist,
    - die Form der Lichteintrittsapertur (30) des zweiten optischen Elements ein Aspektverhältnis von 0,8:1 bis 1,2:1, vorzugsweise von 0,9:1 bis 1,1:1, besonders bevorzugt von 1:1 für zwei zueinander senkrechte Richtungen aufweist, und
    - die Tiefe $y\_G$ der Lichteintrittsfläche (24) des ersten optischen Elements und die Tiefe $y2$ der Lichteintrittsapertur (30) des zweiten optischen Elements in einem Verhältnis $y\_G/y2$ stehen, welches im Bereich von 0,85 bis 1,15, vorzugsweise im Bereich von 0,9 bis 1,11 liegt, **dadurch gekennzeichnet, dass**
    - die Lichteintrittsfläche (24) des ersten optischen Elements (2) eine Breite x gemessen in Richtung entlang des Schnitts der Lichteintrittsfläche (24) mit der Ebene der Lichtumlenkung an der Anschnittfläche (21) und
    - die Lichteintrittsapertur (30) des zweiten optischen Elements (3) eine Höhe z gemessen in Richtung entlang des Schnitts der Lichtaustrittsfläche (25) des ersten optischen Elements (2) mit der Ebene der Lichtumlenkung an der Anschnittfläche (21) aufweisen, wobei die Breite x und Höhe z in folgender Beziehung zueinander stehen:

    $$x/z \leq 1,5 \cdot \left[\tan\left(90° - \alpha/2\right) - \tan\left(90° - \left(2 \cdot \left[\alpha/2 + 90°\right] - \left[180° - \arcsin\left(1/n\right)\right]\right)\right)\right]^{-1},$$

    wobei $\alpha$ den Umlenkwinkel des Lichts an der Anschnittfläche (21) und n den Brechungsindex des Materials des ersten optischen Elements (2) bezeichnen.

2.  Optische Anordnung (1) gemäß dem vorstehenden Anspruch, **dadurch gekennzeichnet, dass** die Breite x und Höhe z zusätzlich in folgender Beziehung zueinander stehen:

    $$x/z \geq 0,85 \cdot \left[\tan\left(90° - \alpha/2\right) - \tan\left(90° - \left(2 \cdot \left[\alpha/2 + 90°\right] - \left[180° - \arcsin\left(1/n\right)\right]\right)\right)\right]^{-1}$$

3.  Optische Anordnung (1) gemäß einem der vorstehenden Ansprüche, **dadurch gekennzeichnet, dass** der Umlenkwinkel an der Anschnittfläche (21) des ersten optischen Elements (2) im Bereich von 75° bis 105° liegt.

4.  Optische Anordnung (1) gemäß einem der vorstehenden Ansprüche, **dadurch gekennzeichnet, dass** der Lichtleiter (19) des ersten optischen Elements in Gestalt eines Prismas (20) ausgebildet ist, wobei dessen Lichteintrittsfläche (24) durch die nicht angeschnittene Grundfläche des Prismas (20) gebildet wird.

5.  Optische Anordnung (1) gemäß einem der vorstehenden Ansprüche, **dadurch gekennzeichnet, dass** die Querschnittfläche des Lichtleiters (19) eine Form aufweist, deren Abmessung sich in Richtung der vom zweiten optischen Element (3) abgewandten Seite zum zweiten optischen Element (3) hin monoton erweitert und dabei in zumindest einem Abschnitt entlang dieser Richtung streng monoton erweitert.

6.  Optische Anordnung gemäß dem vorstehenden Anspruch, **dadurch gekennzeichnet, dass** der Lichtleiter (19) zwei gegenüberliegende ebene Seitenflächen (190, 191) aufweist, wobei eine der Seitenflächen (191) die Lichtaustrittsfläche (25) umfasst, und wobei die Seitenfläche (191) mit der Lichtaustrittsfläche (25) breiter ist, als die gegenüberliegende Seitenfläche (190).

7.  Optische Anordnung (1) gemäß einem der vorstehenden Ansprüche, **dadurch gekennzeichnet, dass** die Anschnittfläche (21) in einem Winkel von 45° zur Längsrichtung des Lichtleiters steht, so dass das im Lichtleiter (19) geleitete Licht um 90° an der Anschnittfläche (21) umgelenkt wird.

8.  Optische Anordnung gemäß dem vorstehenden Anspruch, **dadurch gekennzeichnet, dass** die Höhe z der Lichteintrittsapertur (30) des zweiten optischen Elements (3) und die Breite x der Lichteintrittsfläche (24) des ersten optischen Elements in folgender Beziehung zueinander stehen:

$$x/z \le 1,5 \cdot \left[1 + \tan(\arcsin(1/n))\right]^{-1},$$

wobei n den Brechungsindex des Materials des ersten optischen Elements (2) bezeichnet.

9.  Optische Anordnung gemäß einem der vorstehenden Ansprüche, **dadurch gekennzeichnet, dass** für das Verhältnis von Höhe $z_a$ der auf die Lichtaustrittsfläche (25) des ersten optischen Elements 2 projizierten Anschnittfläche (21) und der Höhe z der Lichteintrittsapertur (30) des zweiten optischen Elements (3) gilt:

$$z_a/z \le 1,5 \cdot \left[\tan(\alpha/2) \cdot \left[\tan(90° - \alpha/2) - \tan(90° - (2 \cdot [\alpha/2 + 90°] - [180° - \arcsin(1/n)]))\right]\right]^{-1}$$

10. Optische Anordnung gemäß dem vorstehenden Anspruch, **dadurch gekennzeichnet, dass** für das Verhältnis von Höhe $z_a$ der auf die Lichtaustrittsfläche (25) des ersten optischen Elements 2 projizierten Anschnittfläche (21) und der Höhe z der Lichteintrittsapertur (30) des zweiten optischen Elements (3) außerdem gilt:

$$z_a/z \ge 0,85 \cdot \left[\tan(\alpha/2) \cdot \left[\tan(90° - \alpha/2) - \tan(90° - (2 \cdot [\alpha/2 + 90°] - [180° - \arcsin(1/n)]))\right]\right]^{-1}$$

11. Optische Anordnung gemäß einem der vorstehenden Ansprüche, **dadurch gekennzeichnet, dass** das Material des ersten optischen Elements einen Brechungsindex von mindestens 1,4, vorzugsweise von höchstens 2,0 für sichtbares Licht aufweist.

12. Beleuchtungseinrichtung (100) mit einer optischen Anordnung (1) gemäß einem der vorstehenden Ansprüche, **gekennzeichnet durch** mehrere Leuchtelemente (50, 51, 52, 53, 54), die sich hinsichtlich der Farbe des abgegebenen Lichts voneinander unterscheiden, wobei die Leuchtelemente (50, 51, 52, 53, 54) so angeordnet sind, dass deren Licht in die Lichteintrittsfläche (24) des ersten optischen Elements (2) eingekoppelt wird.

13. Beleuchtungseinrichtung (100) gemäß dem vorstehenden Anspruch, wobei das zweite optische Element (3) einen Lichtleiter (31) umfasst, in welchen Licht, welches aus dem ersten optischen Element (2) austritt, eingekoppelt wird, wobei der Lichtleiter lichtstreuende Strukturen entlang seiner Längsrichtung aufweist, welche eingekoppeltes Licht aus dem Lichtleiter (31) herausstreuen.

**Claims**

1.  An optical arrangement (1), comprising:

    - a first optical element (2) in the form of or comprising a light guide (19) obliquely bevelled to have a bevel face (21); and
    - a second optical element (3);
    wherein the first optical element (2)
    - conducts light by total internal reflection at the wall (22) thereof; and
    - has a light entry area (24) defined by the non-bevelled end face of the light guide (19); and
    - has a light exit area (25), wherein the light exit area (25) is defined by a surface area of the wall (22) at that end of the light guide (19) at which the bevel face (21) is provided;
    wherein
    - the second optical element (3) has a light entry aperture (30), which is arranged on the light exit area (25) of the first optical element (2) or faces the light exit area (25) of the first optical element (2);
    - the shape of the light entry aperture (30) of the second optical element has an aspect ratio from 0.8:1 to 1.2:1, preferably from 0.9:1 to 1.1:1, most preferably of 1:1 for two mutually perpendicular directions; and
    - the depth y_G of the light entry area (24) of the first optical element and the depth y2 of the light entry aperture (30) of the second optical element define a ratio y_G/y2 which is in a range from 0.85 to 1.15, preferably in a range from 0.9 to 1.11;
**characterised in that**
- the light entry area (24) of the first optical element (2) has a width x measured in the direction along the intersection of the light entry area (24) with the plane of light deflection at the bevel face (21) and
- the light entry aperture (30) of the second optical element (3) has a height z measured in the direction along the intersection of the light exit area (25) of the first optical element (2) with the plane of light deflection at the bevel face (21), which width x and height z meet the following relationship:

$$x/z \leq 1.5 \cdot \left[ \tan\left(90° - \alpha/2\right) - \tan\left(90° - \left(2 \cdot \left[\alpha/2 + 90°\right] - \left[180° - \arcsin\left(1/n\right)\right]\right)\right)\right]^{-1},$$

wherein $\alpha$ denotes the deflection angle of the light at the bevel face (21) and n denotes the refractive index of the material of the first optical element (2).

2. The optical arrangement (1) according to the preceding claim, **characterised in that** the width x and height z furthermore meet the following relationship:

$$x/z \geq 0.85 \cdot \left[ \tan\left(90° - \alpha/2\right) - \tan\left(90° - \left(2 \cdot \left[\alpha/2 + 90°\right] - \left[180° - \arcsin\left(1/n\right)\right]\right)\right)\right]^{-1}.$$

3. The optical arrangement (1) according to any one of the preceding claims, **characterised in that** the deflection angle at the bevel face (21) of the first optical element (2) ranges from 75° to 105°.

4. The optical arrangement (1) according to any one of the preceding claims, **characterised in that** the light guide (19) of the first optical element has the shape of a prism (20), wherein the light entry area (24) thereof is defined by the non-bevelled base of the prism (20).

5. The optical arrangement (1) according to any one of the preceding claims, **characterised in that** the cross-sectional area of the light guide (19) has a shape with dimensions monotonically expanding in a direction from the end facing away from the second optical element (3) towards the second optical element (3), and strictly monotonically expanding in at least one section along this direction.

6. The optical arrangement according to the preceding claim, **characterised in that** the light guide (19) has two opposite flat faces (190, 191), wherein one of the faces (191) includes the light exit area (25), and wherein the face (191) that includes the light exit area (25) is wider than the opposite face (190).

7. The optical arrangement (1) according to any one of the preceding claims, **characterised in that** the bevel face (21) extends at an angle of 45° relative to the longitudinal extension of the light guide, so that the light conducted in the light guide (19) is deflected by 90° at the bevel face (21).

8. The optical arrangement according to the preceding claim, **characterised in that** the height z of the light entry aperture (30) of the second optical element (3) and the width x of the light entry area (24) of the first optical element meet the following relationship:

$$x/z \leq 1.5 \cdot \left[1 + \tan\left(\arcsin\left(1/n\right)\right)\right]^{-1},$$

wherein n denotes the refractive index of the material of the first optical element (2).

9. The optical arrangement according to any one of the preceding claims, **characterised in that** the following relationship applies for a ratio of the height $z_a$ of the projection of the bevel face (21) on the light exit area (25) of the first optical element (2) and the height z of the light entry aperture (30) of the second optical element (3):

$$z_a / z \leq 1.5 \cdot \left[ \tan\left(\alpha/2\right) \cdot \left[ \tan\left(90° - \alpha/2\right) - \tan\left(90° - \left(2 \cdot \left[\alpha/2 + 90°\right] - \left[180° - \arcsin\left(1/n\right)\right]\right)\right) \right] \right]^{-1}.$$

10. The optical arrangement according to the preceding claim, **characterised in that**, furthermore, the following relationship applies for the ratio of the height $z_a$ of the projection of the bevel face (21) on the light exit area (25) of the first optical element (2) and the height z of the light entry aperture (30) of the second optical element (3):

$$z_a / z \geq 0.85 \cdot \left[ \tan\left(\alpha/2\right) \cdot \left[ \tan\left(90° - \alpha/2\right) - \tan\left(90° - \left(2 \cdot \left[\alpha/2 + 90°\right] - \left[180° - \arcsin\left(1/n\right)\right]\right)\right) \right] \right]^{-1}.$$

11. The optical arrangement according to any one of the preceding claims, **characterised in that** the material of the first optical element has a refractive index for visible light of at least 1.4, preferably of not more than 2.0.

12. A lighting device (100) comprising an optical arrangement (1) according to any one of the preceding claims, **characterised by** a plurality of light-emitting elements (50, 51, 52, 53, 54) which differ from each other in terms of the colour of the emitted light, wherein the light-emitting elements (50, 51, 52, 53, 54) are arranged so as to inject their light into the light entry area (24) of the first optical element (2).

13. The lighting device (100) according to the preceding claim, wherein the second optical element (3) comprises a light guide (31) into which light is injected which is emitted from the first optical element (2), wherein the light guide has light-scattering features along its longitudinal extension, which scatter the injected light out of the light guide (31).

**Revendications**

1. Dispositif optique (1) comprenant

- un premier élément optique (2) sous la forme d'un guide de lumière (19) coupé en biais avec une surface chanfreinée (21) ou comportant un tel guide de lumière, et
- un deuxième élément optique (3), sachant que le premier élément optique (2)
- guide la lumière par réflexion totale sur sa paroi (22), et
- présente une surface d'entrée de lumière (24) qui est constituée par la face frontale non chanfreinée du guide de lumière (19), et
- une surface de sortie de lumière (25), ladite surface de sortie de lumière (25) étant constituée par une partie de la paroi (22) à l'extrémité du guide de lumière (19), sur laquelle est disposée la surface chanfreinée (21),
- le deuxième élément optique (3) présente une ouverture d'entrée de lumière (30) qui est disposée sur la surface de sortie de lumière (25) du premier élément optique (2) ou en vis-à-vis de la surface de sortie de lumière (25) du premier élément optique (2),
- la forme de l'ouverture d'entrée de lumière (30) du deuxième élément optique présente un rapport d'aspect de 0,8:1 à 1,2:1, de préférence de 0,9:1 à 1,1:1, et de manière particulièrement avantageuse de 1:1, pour deux directions mutuellement perpendiculaires, et
- la profondeur y_G de la surface d'entrée de lumière (24) du premier élément optique et la profondeur y2 de l'ouverture d'entrée de lumière (30) du deuxième élément optique présente un rapport de y_G/y2 qui est compris dans la plage allant de 0,85 à 1,15, de préférence dans la plage allant de 0,9 à 1,11,
**caractérisé en ce que**
- la surface d'entrée de lumière (24) du premier élément optique (2) présente une largeur x, mesurée dans la direction le long de l'intersection de la surface d'entrée de lumière (24) avec le plan de la déviation de lumière sur la surface chanfreinée (21), et
- l'ouverture d'entrée de lumière (30) du deuxième élément optique (3) présente une hauteur z mesurée dans la direction le long de l'intersection de la surface de sortie de lumière (25) du premier élément optique (2) avec le plan de la déviation de lumière sur la surface chanfreinée (21), la largeur x et la hauteur z présentant la relation suivante l'une par rapport à l'autre :

$$x/z \leq 1,5 \cdot \left[ \tan(90° - \alpha/2) - \tan(90° - (2 \cdot [\alpha/2 + 90°] - [180° - \arcsin(1/n)])) \right]^{-1},$$

α désignant l'angle de déviation de la lumière sur la surface chanfreinée (21) et n l'indice de réfraction du matériau du premier élément optique (2).

2. Dispositif optique (1) selon la revendication précédente, **caractérisé en ce que** la largeur x et la hauteur z présentent en outre la relation suivante l'une par rapport à l'autre :

$$x/z \geq 0,85 \cdot [\tan(90°-\alpha/2)-\tan(90°-(2\cdot[\alpha/2+90°]-[180°-\arcsin(1/n)]))]^{-1}.$$

3. Dispositif optique (1) selon l'une des revendications précédentes, **caractérisé en ce que** l'angle de déviation sur la surface chanfreinée (21) du premier élément optique (2) est compris dans la plage allant de 75° à 105°.

4. Dispositif optique (1) selon l'une des revendications précédentes, **caractérisé en ce que** le guide de lumière (19) du premier élément optique est réalisé sous la forme d'un prisme (20), la surface d'entrée de lumière (24) de celui-ci étant constituée par la surface de base non chanfreinée du prisme (20).

5. Dispositif optique (1) selon l'une des revendications précédentes, **caractérisé en ce que** l'aire de section transversale du guide de lumière (19) présente une forme dont la dimension s'élargit de façon monotone vers le deuxième élément optique (3), dans la direction du côté détourné du deuxième élément optique (3), et s'élargit alors de façon strictement monotone dans au moins une partie le long de cette direction.

6. Dispositif optique selon la revendication précédente, **caractérisé en ce que** le guide de lumière (19) présente deux faces latérales (190, 191) planes situées en vis-à-vis l'une de l'autre, l'une des faces latérales (191) comprenant la surface de sortie de lumière (25), et la face latérale (191), avec la surface de sortie de lumière (25), étant plus large que la face latérale (190) opposée.

7. Dispositif optique (1) selon l'une des revendications précédentes, **caractérisé en ce que** la surface chanfreinée (21) forme un angle de 45° avec la direction longitudinale du guide de lumière, de sorte que la lumière guidée dans le guide de lumière (19) est déviée de 90° sur la surface chanfreinée (21).

8. Dispositif optique selon la revendication précédente, **caractérisé en ce que** la hauteur z de l'ouverture d'entrée de lumière (30) du deuxième élément optique (3) et la largeur x de la surface d'entrée de lumière (24) du premier élément optique présentent la relation suivante l'une par rapport à l'autre :

$$x/z \leq 1,5 \cdot [1+\tan(\arcsin(1/n))]^{-1},$$

n désignant l'indice de réfraction du matériau du premier élément optique (2).

9. Dispositif optique selon l'une des revendications précédentes, **caractérisé en ce que** pour le rapport entre la hauteur $z_a$ de la surface chanfreinée (21) projetée sur la surface de sortie de lumière (25) du premier élément optique 2 et la hauteur z de l'ouverture d'entrée de lumière (30) du deuxième élément optique (3), la relation suivante s'applique :

$$z_a/z \leq 1,5 \cdot [\tan(\alpha/2) \cdot [\tan(90°-\alpha/2)-\tan(90°-(2\cdot[\alpha/2+90°]-[180°-\arcsin(1/n)]))]]^{-1}.$$

10. Dispositif optique selon la revendication précédente, **caractérisé en ce que** pour le rapport entre la hauteur $z_a$ de la surface chanfreinée (21) projetée sur la surface de sortie de lumière (25) du premier élément optique 2 et la hauteur z de l'ouverture d'entrée de lumière (30) du deuxième élément optique (3), la relation suivante s'applique en plus :

$$z_a/z \geq 0,85 \cdot [\tan(\alpha/2) \cdot [\tan(90°-\alpha/2)-\tan(90°-(2\cdot[\alpha/2+90°]-[180°-\arcsin(1/n)]))]]^{-1}.$$

11. Dispositif optique selon l'une des revendications précédentes, **caractérisé en ce que** le matériau du premier élément optique présente un indice de réfraction d'au moins 1,4, de préférence d'au maximum 2,0 pour la lumière visible.

**12.** Dispositif d'éclairage (100) doté d'un dispositif optique (1) selon l'une des revendications précédentes, **caractérisé en ce qu'**il comporte plusieurs éléments d'éclairage (50, 51, 52, 53, 54) qui se distinguent les uns par rapport aux autres en ce qui concerne la couleur de la lumière émise, les éléments d'éclairage (50, 51, 52, 53, 54) étant disposés de manière à ce que leur lumière soit couplée dans la surface d'entrée de lumière (24) du premier élément optique (2).

**13.** Dispositif d'éclairage (100) selon la revendication précédente, dans lequel le deuxième élément optique (3) comprend un guide de lumière (31) dans lequel est injectée de la lumière qui sort du premier élément optique (2), le guide de lumière présentant le long de sa direction longitudinale des structures de dispersion de lumière, qui dispersent hors du guide de lumière (31) la lumière injectée.

Fig. 1

Fig. 2

EP 3 071 879 B1

Fig. 3a

Fig. 3b

Fig. 4

Fig. 5b

Fig. 5a

Fig. 6

Fig. 12

Fig. 13

Fig. 7

Fig. 8

Fig. 9

EP 3 071 879 B1

Fig. 10

EP 3 071 879 B1

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010013181 A1
- DE 102012022716 A1
- DE 199942513 A1
- US 6092904 A
- WO 2004001456 A2
- US 2006126178 A1